# EUROPÄISCHE PATENTSCHRIFT

(11) **EP 4 029 759 B1**
(45) Veröffentlichungstag und Bekanntmachung des Hinweises auf die Patenterteilung: **05.04.2023**
(21) Anmeldenummer: 21152265.1
(22) Anmeldetag: 19.01.2021
(51) Int. Cl.: B62B 1/04

(54) **HANDBEWEGTE HUB- UND TRANSPORTKARRE FÜR GARTENFLIESEN**
HAND-OPERATED LIFTING AND TRANSPORT TRUCK FOR GARDEN TILES
CHARIOT DE LEVAGE ET DE TRANSPORT GUIDÉ À MAIN POUR CARRELAGE DE JARDIN

(43) Veröffentlichungstag der Anmeldung: 20.07.2022
(73) Patentinhaber: Haist, Egon, 72270 Baiersbronn-Mitteltal (DE)
(72) Erfinder: Haist, Egon, 72270 Baiersbronn-Mitteltal (DE)
(74) Vertreter: Witte, Weller & Partner Patentanwälte mbB

(56) Entgegenhaltungen:
- CN-A- 103 600 758
- DE-U1- 29 711 716
- GB-A- 2 376 455
- GB-A- 2 494 106

## Beschreibung

Die Erfindung betrifft eine handbewegte Hub- und Transportkarre für Gartenfliesen mit den Merkmalen des Oberbegriffs des Anspruchs 1. Die Hub- und Transportkarre ist allgemein zu einem Anheben und Bewegen von Gegenstände vorgesehen, die so schwer sind, dass sie nur schwer, nur mit der Gefahr von Gesundheitsschäden oder gar nicht von Hand angehoben werden können.

Das Gebrauchsmuster DE 20 2016 017 036 U1 offenbart eine elektromechanische Hubkarre, die ähnlich einer Sackkarre mit zwei gleichachsig angeordneten Rädern und einem ebenen Rohrgestell ausgebildet ist, an dem eine Stellplatte zu einem Daraufstellen eines Gegenstands vertikal verfahrbar angeordnet ist. Angehoben wird die Stellplatte elektromechanisch mittels eines Elektromotors über zwei symmetrisch angeordnete Seilzüge.

Die Patentanmeldung GB 2 376 455 A offenbart eine handbewegte Hub- und Transportkarre mit zwei gleichachsig in einem Abstand voneinander angeordneten Rädern, auf denen ein quaderförmiges, räumliches Rohrgestell aus Vierkantrohren angeordnet ist. Ein Kragträger ist in seiner Neigung verstellbar mit Steckstiften in einer Mittelebene des Rohrgestells befestigt. Auf einer gegenüberliegenden Seite wie der Kragträger ist eine Griffstange mit zwei Haltestangen außen an beiden Seiten des Rohrgestells befestigt.

Das Gebrauchsmuster DE 297 11716 U1 offenbart eine handbewegte Hub- und Transportkarre, die nach Art einer Sackkarre ausgebildet ist, die anstelle einer Stellplatte einen längenverstellbaren Kragarm mit einem Haken zum Anhängen einer Last aufweist.

Die chinesische Patentanmeldung CN 103 600 758 A offenbart eine handbewegte Hub- und Transportkarre mit einem U-Bügel, an dessen beiden Enden zwei Räder gleichachsig und mit Abstand voneinander angeordnet sind. Der U-Bügel wird von einer abgewinkelten Haltestange überkreuzt, die an einem Ende eine Griffstange aufweist und auf einer gegenüberliegenden Seite einen Kragarm zum Anhängen einer Last bildet.

Die Patentanmeldung GB 2 494 106 A offenbart eine Hub- und Transportkarre zum Anheben und Bewegen eines Kübels. Diese Hub- und Transportkarre weist einen Einstellring für den Kübel auf, der um eine Schwenkachse schwenkbar ist, die parallel zu einer Radachse verläuft derart, dass sich ein eingestellter Kübel durch Gewichtskraft vertikal ausrichtet. Zwischen der Schwenkachse und der Radachse stehen zwei Haltestangen mit Handgriffen an ihren Enden parallel zueinander und senkrecht zu einer Ebene durch die Schwenkachse und die Radachse ab.

Aufgabe der Erfindung ist, eine Hub- und Transportkarre vorzuschlagen, die ein Anheben und Bewegen von Gegenständen mit einem Gewicht von bis zu etwa einem Gewicht eines Menschen ausschließlich von Hand, das heißt mit Muskelkraft, ermöglicht.

Diese Aufgabe wird erfindungsgemäß durch die Merkmale des Anspruchs 1 gelöst. Die erfindungsgemäße Hub- und Transportkarre ist zu einem Anheben und Bewegen von Gartenfliesen mit einer Kantenlänge von beispielsweise 600 mm x 600 mm und einem Gewicht von beispielsweise bis zu etwa 60 kg von Hand, das heißt mit Muskelkraft, vorgesehen. Selbstverständlich können auch andere Gegenstände mit der erfindungsgemäßen Hub- und Transportkarre mit Muskelkraft angehoben und bewegt werden.

Die erfindungsgemäße Hub- und Transportkarre weist ein und vorzugsweise zwei gleichachsig in etwa schulterbreitem axialem Abstand voneinander angeordnete Räder zu einem Fahren auf einem Untergrund auf, wobei die Hub- und Transportkarre zum Fahren von Hand geschoben oder gezogen wird. An dem Rad/den Rädern stützt sich ein Tragmast mit einem Kragträger ab. Der Tragmast kann beispielsweise stab-, profilstab-, platten- oder rohrförmig sein, er kann beispielsweise auch ein ebenes, flächiges oder räumliches Tragwerk, Stabwerk, Fachwerk oder Flächentragwerk aufweisen. Die Aufzählung ist beispielhaft und nicht abschließend.

Von dem Tragmast steht der Kragträger rechtwinklig oder in einem anderen, auch in einem einstellbaren Winkel ab. Der Kragträger steht in einer Radialebene einer Radachse des oder der gleichachsigen Räder der Hub- und Transportkarre ab oder jedenfalls so, dass sich ein Anhängepunkt, an dem sich der Gegenstand an dem Kragträger aufhängen lässt, in einer Radialebene der Radachse vorzugsweise in einer Mitte zwischen zwei Rädern der Hub- und Transportkarre befindet. Der Anhängepunkt befindet sich beispielsweise in einer Hüfthöhe, das heißt in einer Höhe von beispielsweise etwa 700 mm über einem horizontalen Untergrund, auf dem das oder die Räder der Hub- und Transportkarre stehen oder rollen, wenn der Tragmast senkrecht nach oben stehend ausgerichtet ist. Die Höhe des Anhängepunkts des Kragträgers kann einstellbar sein.

Der Kragträger kann wie der Tragmast beispielsweise stab-, profilstab-, platten- oder rohrförmig sein und/oder ein ebenes, flächiges oder räumliches Tragwerk, Stabwerk, Fachwerk oder Flächentragwerk aufweisen, wobei der Tragmast und der Kragträger verschiedene Konstruktionen aufweisen können. Die Aufzählung ist beispielhaft und nicht abschließend. Der Kragträger kann in seinem Winkel zum und/oder seiner Höhe am Tragmast einstellbar sein, wobei die Höhe ein Abstand von der Radachse beziehungsweise ein Abstand von dem Untergrund ist. Der Kragträger kann beispielsweise auch teleskopierbar oder in anderer Weise längenverstellbar und/oder ein Abstand des Anhängepunkts für den anzuhängenden und zu bewegenden Gegenstand am Kragträger vom Tragmast kann einstellbar sein.

Zum Bewegen mit Muskelkraft weist die erfindungsgemäße Hub- und Transportkarre einen oder vorzugsweise zwei Handgriffe zu einem Greifen mit einer oder mit beiden Händen eines Menschen auf, wobei zwei Handgriffe beispielsweise etwa mit schulterbreitem Abstand nebeneinander angeordnet sind. Bezüglich einer gedachten Axialebene des oder der Räder der Hub- und Transportkarre befinden sich der oder die Handgriffe auf einer dem Kragträger gegenüberliegenden Seite des Tragmasts und weisen einen Abstand von dem Tragmast auf wodurch ein Hebelarm zu einem leichteren Anheben eines an dem Kragträger aufgehängten Gegenstands gebildet ist. Befindet sich die Hub- und Transportkarre in einer zum Anheben und Bewegen des Gegenstands vorgesehenen Position mit senkrecht oder schräg nach obenstehendem Tragmast, befinden sich das oder die Räder von oben gesehen zwischen dem oder den Handgriffen und dem Kragträger beziehungsweise dem Anhängepunkt am Kragträger. Dadurch lässt sich der Gegenstand anheben indem der oder die Handgriffe mit Muskelkraft und vorzugsweise unter Einsatz eines Körpergewichts nach unten gedrückt werden. Abhängig von einem Hebelverhältnis lässt sich der Gegenstand mit einer kleineren Kraft von oben auf den oder die Handgriffe als dem Gewicht des Gegenstands anheben. Das Hebelverhältnis ist ein Verhältnis senkrecht von oben gesehener Abstände einerseits des oder der Handgriffe von der Radachse und andererseits des Anhängepunkts des Gegenstands am Kragträger ebenfalls von der Radachse. Das Hebelverhältnis ändert sich durch Kippen der Hub- und Transportkarre um die Radachse.

Die Handgriffe werden von einer Griffstange gebildet, die mit einer Haltestange und zwei in Seitenansicht dreiecksförmig angeordneten Streben an dem Tragmast befestigt ist. Erfindungsgemäß befinden sich der Tragmast, der Kragträger, die Haltestange und die beiden Streben in einer Radialebene der Radachse.

Die Erfindung wird nachfolgend anhand eines in der Zeichnung dargestellten Ausführungsbeispiels näher erläutert. Es zeigen:
- Figur 1: eine Seitenansicht einer Hub- und Transportkarre gemäß der Erfindung; und
- Figur 2: die Hub- und Transportkarre aus Figur 1 von oben.

Die Zeichnung ist eine vereinfachte Schemadarstellung zum Verständnis und zur Erläuterung der Erfindung.

Die in der Zeichnung dargestellte, erfindungsgemäße Hub- und Transportkarre 1 weist zwei gleichachsig mit etwa schulterbreitem Abstand voneinander angeordnete Räder 2 auf. Im Ausführungsbeispiel weisen die beiden Räder 2 einen axialen Abstand von 700 mm voneinander auf. Die beiden Räder 2 sind drehbar an Enden einer Radwelle 3 angeordnet, von deren Mitte ein Tragmast 4 senkrecht absteht, der im Ausführungsbeispiel ein gerades Vierkantrohr ist.

In einem Abstand von im Ausführungsbeispiel 700 mm von einer Radachse 5 der Räder 2 ist ein Kragträger 6 an dem Tragmast 4 angeordnet. Im Ausführungsbeispiel weist der Kragträger 6 ein erstes Vierkantrohr auf, das auf einem zweiten Vierkantrohr verschiebbar geführt ist, das heißt der Kragträger 6 ist teleskopierbar und seine Länge ist einstellbar. Im Ausführungsbeispiel befindet sich der Kragträger 6 in derselben Radialebene der Radachse 5 wie der Tragmast 4 in einer Mitte zwischen den beiden Rädern 2.

Andere Ausführungen des Tragmasts 4 und/oder des Kragträgers 6 sind möglich. Der Tragmast 4 und/oder der Kragträger 6 können Stäbe, Profilstäbe, Platten oder Rohre mit an sich beliebigen Querschnitt sein oder aufweisen (nicht dargestellt). Auch ebene, nicht-ebene flächige oder räumliche Tragwerke, Stabwerke, Fachwerke oder Flächentragwerke sind möglich (nicht dargestellt), wobei der Tragmast 4 und der Kragträger 6 gleiche oder verschiedene Konstruktionen aufweisen können.

Der Kragträger 6 steht auf einer Seite von einer gedachten Axialfläche der Radachse 5, in der sich der Tragmast 4 befindet, ab. Durch die Längeneinstellbarkeit des Kragträgers 6 weist ein Anhängepunkt 7, der zu einem Aufhängen eines Gegenstands an dem Kragträger 6 vorgesehen ist, im Ausführungsbeispiel einen Abstand D₁ von dem Tragmast 4 zwischen 600 mm und 760 mm auf. Im Ausführungsbeispiel ist der am Anhängepunkt 7 des Kragträgers 6 aufgehängte Gegenstand eine Gartenfliese 8 mit einer Kantenlänge von 600 mm x 600 mm und einem Gewicht von etwa 60 kg. Aufgehängt ist die Gartenfliese 8 im Ausführungsbeispiel mit einem Seil 9 mit fester Länge, das an dem Anhängepunkt 7 am Kragträger 6 befestigt ist.

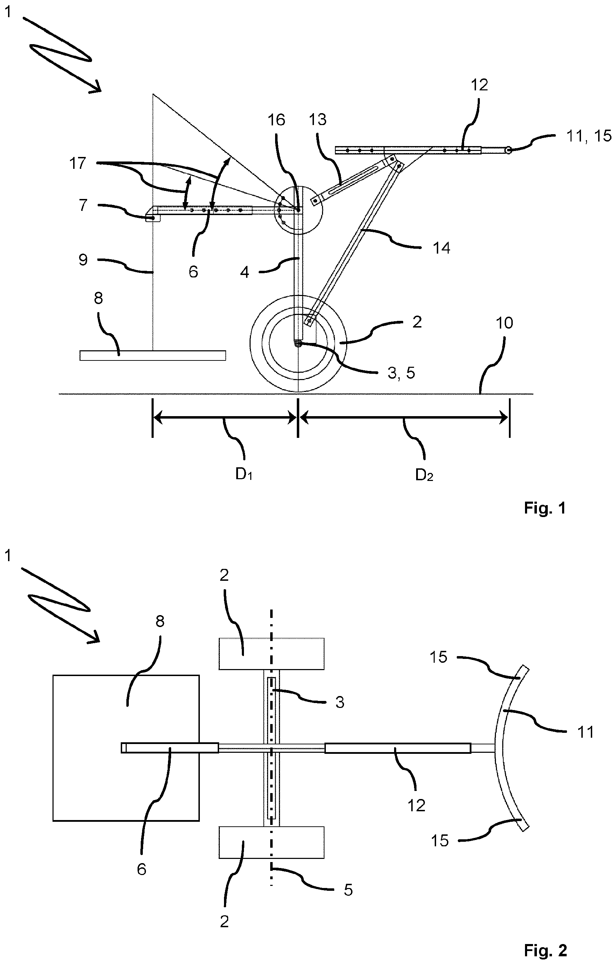

Der Kragträger 6 ist schwenkbar um eine zu der Radachse 5 parallele Schwenkachse 16 am Tragmast 4 befestigt, das heißt ein Winkel zwischen dem Kragträger 6 und dem Tragmast 4 ist einstellbar, wie in Figur 1 mit den beiden Doppelpfeilen 17 veranschaulicht, wodurch auch eine Höhe des Anhängepunkts 7 über einem Untergrund 10, auf dem die Räder 2 der Hub- und Transportkarre 1 stehen oder rollen, und ein senkrechter Abstand D₁ des Anhängepunkts 7 vom Tragmast 4 einstellbar sind. Die Höhe des Anhängepunkts 7 ist dessen senkrechter Abstand von dem horizontalen Untergrund 10 bei vertikalem Tragmast 4 beziehungsweise der senkrechte Abstand des Anhängepunkts 7 von dem Untergrund 10 bei senkrecht zum Untergrund 10 ausgerichtetem Tragmast 4. Durch Schwenken der Hub- und Transportkarre 1 um die Radachse 5 ändert sich die Höhe des Anhängepunkts 7.

Auf einer dem Kragträger 6 gegenüberliegenden Seite des Tragmasts 4 weist die erfindungsgemäße Hub- und Transportkarre 1 eine Griffstange 11 auf, die an einer Haltestange 12 befestigt ist. Die Haltestange 12 ist mit zwei Streben 13, 14 am Tragmast 4 befestigt, die in Seitenansicht dreiecksförmig angeordnet sind. Die Streben 13, 14 und die Haltestange 12 sind im Ausführungsbeispiel in derselben Radialebene der Radachse 5 in der Mitte zwischen den beiden Rädern 2 angeordnet wie der Tragmast 4 und der Kragträger 6. Die Griffstange 11 steht horizontal beiderseits gleich weit von der Haltestange 12 ab und bildet zwei Handgriffe 15. Die Haltestange 12 ist mit zwei ineinander verschiebbaren Vierkantrohren teleskopierbar ausgebildet, so dass ein Abstand D₂ der Handgriffe 15 von der Axialebene der Räder 2, in der sich der Tragmast 4 befindet, einstellbar ist. Im Ausführungsbeispiel ist der Abstand D₂ der Handgriffe 15 vom Tragmast 4 zwischen 700 mm und 880 mm einstellbar.

Von oben beziehungsweise in Längsrichtung des Tragmasts 4 gesehen befinden sich die Räder 2 zwischen dem Anhängepunkt 7 zum Aufhängen des Gegenstands am Kragträger 6 und den Handgriffen 15, so dass durch Druck auf die Handgriffe 15 von oben der Gegenstand angehoben und durch Schieben oder Ziehen der Hubund Transportkarre 1 bewegt werden kann. Eine Kraft von oben auf die Handgriffe 15 zum Anheben des Gegenstands ist abhängig von einem Hebelverhältnis D₂/D₂, das heißt vom senkrechten Abstand D₂ der Handgriffe 15 von der Axialebene der Räder 2, in der sich der Tragmast 4 befindet, einerseits und vom senkrechten Abstand D₁ des Anhängepunkts 7 für den Gegenstand am Kragträger 6 von der Axialebene der Räder 2 in der sich der Tragmast 4 befindet, andererseits. Das Hebelverhältnis D₂/D₂ ändert sich durch Kippen der Hub- und Transportkarre 1 um die Radachse 5. Ein größerer Abstand D₂ der Handgriffe 15 und/oder ein kleiner Abstand D₁ des Anhängepunkts 7 vom Tragmast 4 erleichtert das Anheben des Gegenstands.

## Patentansprüche

1. Handbewegte Hub- und Transportkarre für Gartenfliesen, mit einem Tragmast (4), an dem ein Rad (2) um eine Radachse (5) drehbar gelagert ist, auf dem die Hub- und Transportkarre (1) auf einem Untergrund (10) fahrbar ist, mit einer Griffstange (11) zu einem Greifen und Bewegen der Hub- und Transportkarre (1) von Hand, die bezüglich einer sich in einer Längsrichtung des Tragmastes (4) erstreckenden Radachsebene auf einer Seite des Tragmastes (4) angeordnet und die an einer Haltestange (12) befestigt ist, und mit einem Kragträger (6), der von einer der Griffstange (11) gegenüberliegenden Seite des Tragmastes (4) absteht und der einen Anhängepunkt (7) in einem Abstand (D₁) von dem Tragmast (4) zu einem Anhängen einer Gartenfliese (8) aufweist, **dadurch gekennzeichnet, dass** die Haltestange (12) mit zwei Streben (13, 14) am Tragmast (4) befestigt ist, die in Seitenansicht dreiecksförmig angeordnet sind, und dass der Tragmast (4), der Kragträger (6), die Haltestange (12) und die beiden Streben (13, 14) in einer Radialebene der Radachse (5) angeordnet sind.

2. Hub- und Transportkarre nach Anspruch 1, **dadurch gekennzeichnet, dass** die Griffstange (11) einen Abstand (D₂) von dem Tragmast (4) aufweist.

3. Hub- und Transportkarre nach Anspruch 2, **dadurch gekennzeichnet, dass** der Abstand (D₂) der Griffstange (11) von dem Tragmast (4) einstellbar ist.

4. Hub- und Transportkarre nach einem oder mehreren der Ansprüche 1 bis 3, **dadurch gekennzeichnet, dass** eine Länge des Kragträgers (6), eine Höhe des Kragträgers (6) über der Radachse (5) und/oder ein Winkel zwischen dem Kragträger (6) und dem Tragmast (4) einstellbar ist.

5. Hub- und Transportkarre nach einem oder mehreren der vorhergehenden Ansprüche, **dadurch gekennzeichnet, dass** die Hub- und Transportkarre (1) zwei gleichachsig mit axialem Abstand voneinander angeordnete Räder (2), auf denen die Hub- und Transportkarre (1) auf dem Untergrund (10) fahrbar ist, aufweist.

6. Hub- und Transportkarre nach einem oder mehreren der vorhergehenden Ansprüche, **dadurch gekennzeichnet, dass** die Griffstange (11) zwei Handgriffe (15) zum Greifen und Bewegen der Hub- und Transportkarre (1) mit zwei Händen aufweist.

## Claims

1. A hand-driven lifting and transport cart for garden tiles, comprising a support mast (4) on which a wheel (2) is rotatably mounted about a wheel axle (5), on which wheel the lifting and transport cart (1) can be driven over the ground (10), comprising a handlebar (11) for gripping and moving the lifting and transport cart (1) by hand, which handlebar is arranged on one side of the support mast (4) with respect to a wheel axle plane extending in a longitudinal direction of the support mast (4) and is fastened to a holding rod (12), and comprising a cantilever beam (6) which projects from a side of the support mast (4) opposite the handlebar (11) and has an attachment point (7) at a distance (D₁) from the support mast (4) for attaching a garden tile (8),**characterised in that** the holding rod (12) is fastened to the support mast (4) by two struts (13, 14) which are arranged in a triangular shape in a side view, and **in that** the support mast (4), the cantilever beam (6), the holding rod (12) and the two struts (13, 14) are arranged in a radial plane of the wheel axle (5).

2. The lifting and transport cart according to claim 1, **characterised in that** the handlebar (11) is at a distance (D₂) from the support mast (4).

3. The lifting and transport cart according to claim 2, **characterised in that** the distance (D₂) of the handle bar (11) from the support mast (4) can be adjusted.

4. The lifting and transport cart according to one or more of claims 1 to 3, **characterised in that** a length of the cantilever beam (6), a height of the cantilever beam (6) above the wheel axle (5) and/or an angle between the cantilever beam (6) and the support mast (4) can be adjusted.

5. The lifting and transport cart according to one or more of the preceding claims, **characterised in that** the lifting and transport cart (1) comprises two wheels (2) which are arranged coaxially at an axial distance from one another and on which the lifting and transport cart (1) can be driven over the ground (10).

6. The lifting and transport cart according to one or more of the preceding claims, **characterised in that** the handlebar (11) has two handles (15) for gripping and moving the lifting and transport cart (1) with two hands.

## Revendications

1. Chariot de levage et de transport mû à la main, dévolu à des dallages de jardin et comprenant un mât de support (4) sur lequel une roue (2) est montée à rotation autour d'un axe (5), et sur laquelle ledit chariot (1) de levage et de transport peut être déplacé sur une structure (10) sous-jacente ; une barre de préhension (11) qui est affectée à une saisie et à une mise en mouvement manuelles dudit chariot (1) de levage et de transport, est disposée d'un côté du mât de support (4) par rapport à un plan de l'axe de la roue s'étendant dans une direction longitudinale dudit mât de support (4), et est fixée à une barre de retenue (12) ; et une potence (6) en porte-à-faux, qui fait saillie au-delà d'un côté du mât de support (4) tourné à l'opposé de la barre de préhension (11) et est munie, à une distance (D₁) dudit mât de support (4), d'un point d'accrochage (7) dédié à une suspension d'un dallage de jardin (8), **caractérisé par le fait que** la barre de retenue (12) est fixée au mât de support (4) au moyen de deux entretoises (13, 14) agencées en une configuration triangulaire en élévation latérale ; et **par le fait que** ledit mât de support (4), la potence (6) en porte-à-faux, ladite barre de retenue (12), et les deux entretoises (13, 14), sont disposés dans un plan radial de l'axe (5) de la roue.

2. Chariot de levage et de transport selon la revendication 1, **caractérisé par le fait que** la barre de préhension (11) se trouve à une distance (D₂) par rapport au mât de support (4).

3. Chariot de levage et de transport selon la revendication 2, **caractérisé par** une faculté de réglage de la distance (D₂) comprise entre la barre de préhension (11) et le mât de support (4).

4. Chariot de levage et de transport selon l'une ou plusieurs des revendications 1 à 3, **caractérisé par** la faculté de réglage d'une longueur de la potence (6) en porte-à-faux, d'une hauteur de ladite potence (6) en porte-à-faux au-dessus de l'axe (5) de la roue, et/ou d'un angle entre ladite potence (6) en porte-à-faux et le mât de support (4).

5. Chariot de levage et de transport selon l'une ou plusieurs des revendications précédentes, **caractérisé par le fait que** ledit chariot (1) de levage et de transport est doté de deux roues (2) agencées coaxialement, à distance axiale l'une de l'autre, sur lesquelles ledit chariot (1) de levage et de transport peut être déplacé sur la structure (10) sousjacente.

6. Chariot de levage et de transport selon l'une ou plusieurs des revendications précédentes, **caractérisé par le fait que** la barre de préhension (11) est pourvue de deux poignées (15) affectées à la saisie et à la mise en mouvement dudit chariot (1) de levage et de transport, à l'aide de deux mains.
